# EUROPÄISCHE PATENTSCHRIFT

(11) **EP 2 088 488 B1**
(45) Veröffentlichungstag und Bekanntmachung des Hinweises auf die Patenterteilung: **28.03.2012**
(21) Anmeldenummer: 08020306.0
(22) Anmeldetag: 21.11.2008
(51) Int. Cl.: H02P 23/00, G05B 19/04

(54) **Antriebsvorrichtung und Verfahren zu deren Betrieb**
Actuation device and method for its operation
Dispositif d'entraînement et son procédé de fonctionnement

(30) Priorität: 01.02.2008 EP 08001955
(43) Veröffentlichungstag der Anmeldung: 12.08.2009
(73) Patentinhaber: Siemens Aktiengesellschaft, 80333 München (DE)
(72) Erfinder: Behr, Wolfram, 80997 München (DE); Hamann, Jens, Dr., 90765 Fürth (DE); Knorr, Markus, 86157 Augsburg (DE); Krejtschi, Jürgen, Dr., 90478 Nürnberg (DE); Schäfers, Elmar, Dr., 90763 Fürth (DE); Stoiber, Dietmar, 90763 Fürth (DE); Wolter, Wolfgang, 85241 Hebertshausen (DE)

(56) Entgegenhaltungen:
- EP-A- 1 880 837

## Beschreibung

Die Erfindung betrifft eine Antriebsvorrichtung, insbesondere für eine große Servopresse, sowie ein Verfahren zu deren Betrieb.

Eine Vielzahl an bekannten Produktions- und Werkzeugmaschinenanwendungen erfordern während des Betriebs der entsprechenden Anwendung nicht immer eine dynamische Zufuhr an Leistung. So kann es durchaus vorkommen, dass während bestimmter Phasen der Produktion oder Anwendung ein weitgehend konstantes, hohes Drehmoment mit entsprechender, weitgehend konstanter Antriebsdrehzahl gefordert ist, während in anderen Prozessphasen die eingangs erwähnte dynamische Leistungszufuhr bei variierender Drehzahl erforderlich ist. Letztgenannte Phasen weisen oftmals einen geringeren Drehmomentbedarf auf als diejenigen mit konstanter Antriebsdrehzahl. Zur Unterscheidung werden solche Phasen im Folgenden als "dynamische Phase" (DP) bzw. "quasi-stationäre Phase" (QSP) bezeichnet.

Aus der EP 1 880 837 A2 ist eine Servopresse mit Energiemanagement bekannt, bei der ein Antriebssystem einer Pressenanlage für eine evtl. Mehrzahl von Pressen mehrere Antriebe umfasst, die über zwischengeschaltete Umrichtereinheiten aus einem gemeinsamen Gleichspannungszwischenkreis gespeist werden. Ein von dem Antriebssystem umfasster Schwungradspeicher speist ggf. elektrische Energie in den Gleichspannungszwischenkreis zurück. Eine elektrisch direkte Verbindung zwischen einem von dem Schwungradspeicher umfassten Motor und einem der zum Antrieb der Pressen vorgesehenen Motoren ist zu keiner Zeit gegeben.

Bekannte Antriebsvorrichtungen, insbesondere Antriebsvorrichtungen für Servopressen, umfassen beispielsweise einen Synchronmotor, mittels welchem eine geforderte mechanische Leistung für einen jeweiligen Verarbeitungsprozess zur Verfügung gestellt wird, wobei der Synchronmotor von einer Asynchronmaschine über einen Umrichter angetrieben wird. Derartige bekannte Vorrichtungen realisieren folglich während aller Verarbeitungsphasen einen mittels des Umrichters geregelten Betrieb, und der Umrichter stellt während jeder Betriebsphase die jeweils geforderte Leistung bereit.

Nachteilig dabei ist, dass der Umrichter auf den größten geforderten Strombedarf der Antriebsvorrichtung abgestimmt und in der Lage sein muss, diesen größten geforderten Strom bereitzustellen.

Aufgabe der Erfindung ist es, eine aufwandsärmere und kostengünstigere Antriebsvorrichtung anzugeben.

Die Aufgabe wird erfindungsgemäß gelöst mit einer Antriebsvorrichtung mit den Merkmalen des Anspruchs 1. Dazu ist bei einer Antriebsvorrichtung mit mindestens einem Servomotor, einem Umrichter und einem aus einem Energieversorgungsnetz speisbaren mechanischen Energiepuffer, welcher zur Umwandlung mechanischer Energie in elektrischen Strom eine erste Asynchronmaschine umfasst, vorgesehen, dass die erste Asynchronmaschine über eine Umschalteinrichtung elektrisch direkt mit dem mindestens einen Synchronmotor verbindbar ist.

Der Vorteil der Erfindung besteht darin, dass durch die direkte elektrische Verbindbarkeit des Synchronmotors mit der ersten Asynchronmaschine, also mittelbar mit dem Energieversorgungsnetz, die Möglichkeit besteht, dem Synchronmotor hohe Ströme, wie sie z.B. bei annähernd konstanter Drehzahl (QSP) zugeführt werden müssen, ganz ohne Umrichter oder allenfalls unterstützend zum Umrichter zuzuführen. Dadurch, dass der Synchronmotor über die Umschalteinrichtung elektrisch direkt mit der ersten Asynchronmaschine verbindbar ist, ergibt sich also eine Möglichkeit zur Umgehung des von der Antriebsvorrichtung gleichwohl umfassten Umrichters. Der Umrichter kann dadurch auf geringere Ströme ausgelegt werden, so dass sich insgesamt eine kostengünstigere Ausführungsform der Antriebsvorrichtung ergibt. Bisher hat der Umrichter in jedem Fall als Schnittstelle zwischen Synchronmotor und Energieversorgungsnetz, ggf. zwischen Synchronmotor und einem dem Energieversorgungsnetz nachgeschalteten Energiepuffer, fungiert, so dass der Umrichter auch auf im stationären Betrieb bei annähernd konstanter Drehzahl erforderliche hohe Ströme ausgelegt werden musste, was zu einer entsprechenden Verteuerung des Umrichters und damit der Antriebsvorrichtung insgesamt geführt hat.

Die direkte Kopplung der ersten Asynchronmaschine mit dem Synchronmotor während des ersten Betriebszustands hat sich in Versuchen als einfaches und robustes sowie kostengünstiges System erwiesen.

Eine bevorzugte Ausführungsform der Erfindung umfasst mindestens eine erste Asynchronmaschine zur Verbindung der Antriebsvorrichtung mit einem Energieversorgungsnetz, mindestens einen Umrichter, eingangsseitig verbunden mit der ersten Asynchronmaschine, eine Umschalteinrichtung umfassend mindestens einen ersten und einen zweiten Eingang, der erste Eingang direkt verbunden mit der ersten Asynchronmaschine und der zweite Eingang verbunden mit dem Umrichter, und mindestens einen Synchronmotor verbunden mit der Umschalteinrichtung zur Zuführung von mechanischer Leistung zu einem Verarbeitungsprozess, wobei die Umschalteinrichtung derart eingerichtet ist, dass während des Betriebs der Antriebsvorrichtung der Synchronmotor während eines ersten Betriebszustands (QSP) direkt von der ersten Asynchronmaschine und während eines zweiten Betriebszustands (DP) von der ersten Asynchronmaschine mittels des Umrichters mit Energie gespeist ist.

Der erste Betriebszustand ist hierbei bevorzugt ein Betriebszustand mit im Wesentlichen konstanter Drehzahl und hohem Strombedarf, also z. B. ein Betriebszustand entsprechend der Eingangs erwähnten quasi-stationären Phase (QSP), und der zweite Betriebszustand ist bevorzugt ein Betriebszustand mit variabler Drehzahl und einem im Vergleich zum ersten Betriebszustand geringeren Strombedarf, also z.B. ein Betriebszustand entsprechend der Eingangs erwähnten dynamischen Phase (DP).

Die Erfindung geht davon aus, dass eine drehzahlvariable Stromerzeugung für den Synchronmotor insbesondere im ersten Betriebszustand (QSP), mit hohem Strombedarf nicht erforderlich ist, dass also der Umrichter nicht auf diesen hohen Strombedarf ausgelegt werden muss. Stattdessen schlägt die Erfindung eine mit der Umschalteinrichtung zu- und abschaltbare Kopplung der ersten Asynchronmaschine mit dem oder jedem mit dem jeweiligen Verarbeitungsprozess in Verbindung stehenden Synchronmotor während des ersten Betriebszustands vor. Während dieser ersten Betriebszustands mit weitgehend konstanter Antriebsdrehzahl und hohem Strombedarf kann eine direkte Kopplung der ersten Asynchronmaschine mit dem Synchronmotor oder anders ausgedrückt eine Umgehung (Bypass) des Umrichters vorliegen. Andererseits wird während des zweiten Betriebszustands mit variierender Drehzahl und geringerem Strombedarf der Synchronmotor von der ersten Asynchronmaschine z.B. mittels des Umrichters geregelt gespeist. Gemäß einer alternativen Ausführungsform kann der Umrichter auch direkt an das Energieversorgungsnetz angeschlossen werden. Da der Strombedarf während des zweiten Betriebszustands geringer ist, muss folglich der Umrichter nur noch auf den geringeren Strombedarf des zweiten Betriebszustands ausgelegt sein.

Die oben erwähnte alternative Ausführungsform zeichnet sich dadurch aus, dass die Antriebsvorrichtung zwei Synchronmotoren umfasst, wobei die erste Asynchronmaschine über die Umschalteinrichtung elektrisch direkt mit einem der beiden Synchronmotoren verbindbar und dauerhaft über den Umrichter elektrisch mit dem anderen Synchronmotor verbunden ist. Der über die Umschalteinrichtung verbindbare Synchronmotor ist damit für den ersten Betriebszustand, also die quasi-stationäre Phase (QSP), vorgesehen. Der über den Umrichter angeschlossene Synchronmotor ist demgegenüber für einen zweiten Betriebszustand, also die dynamische Phase (DP), vorgesehen. Dieser Synchronmotor ist mit dem Umrichter so dimensioniert, dass die dynamische Phase allein von diesem System bewältigt werden kann. Während der gesamten dynamischen Phase oder zumindest Teilen einer solchen dynamischen Phase, ist der verbleibende Teil, also der über die Umschalteinrichtung ansteuerbare Synchronmotor, durch die Umschalteinrichtung von der oder jeder ersten Asynchronmaschine elektrisch getrennt. Zu Beginn des ersten Betriebszustands (QSP) ist der über die Umschalteinrichtung angeschlossene Synchronmotor über diese mit der oder jeder ersten Asynchronmaschine elektrisch verbunden. Durch die mechanische Belastung des Prozesses werden die beiden Synchronmotoren abgebremst, was zu einem übersynchronen Betrieb der ersten Asynchronmaschine führt. Somit wird die erste Asynchronmaschine als Generator betrieben, und es wird mechanische Energie (kinetische Energie des mechanischen Energiepuffers) in elektrische Energie gewandelt und dem über die Umschalteinrichtung angeschlossenen Synchronmotor zugeführt.

Der Vorteil dieser Ausführungsform und auch der nachfolgend beschriebenen Ausführungsform besteht darin, dass der Umrichter nie von dem jeweiligen Synchronmotor getrennt wird, wodurch keine Notwendigkeit einer Synchronisierung von Synchronmotor und Umrichter vor dem Zusammenschalten entsteht. Weiterhin können evtl. vorhandene negative Auswirkungen von Pendelmomenten beim Zusammenschalten des über die Umschalteinrichtung ansteuerbaren Synchronmotors und der ersten Asynchronmaschine durch die weiter bestehende Drehzahlregelung des anderen Synchronmotors aktiv bedämpft werden.

Alternativ zu der Ausführungsform, bei der die erste Asynchronmaschine über die Umschalteinrichtung elektrisch direkt mit einem der beiden Synchronmotoren - zur Unterscheidung im Folgenden als erster Synchronmotor bezeichnet - verbindbar und dauerhaft über den Umrichter elektrisch mit dem anderen Synchronmotor - dem zweiten Synchronmotor - verbunden ist, ist vorgesehen, dass die erste Asynchronmaschine über die Umschalteinrichtung elektrisch direkt mit dem ersten Synchronmotor verbindbar ist und der zweite Synchronmotor über den Umrichter oder den Umrichter und einen elektrischen Energiepuffer direkt aus dem Energieversorgungsnetz speisbar ist.

Die beiden Alternativen unterscheiden sich also lediglich hinsichtlich der jeweiligen Speisung des Umrichters. Diese kann entweder direkt über das Energieversorgungsnetz erfolgen oder indirekt über einen zwischengeschalteten Energiepuffer. Dieser Energiepuffer kann als elektrischer Energiepuffer, z. B. mit Kondensatoren oder dergleichen, oder als mechanischer Energiepuffer mit kinetischem Energiespeicher und Elektromotor realisiert sein.

Bevorzugt ist vorgesehen, dass die Antriebsvorrichtung eine Steuereinrichtung umfasst, mit der während des ersten Betriebszustands (QSP) die Umschalteinrichtung zur elektrischen Verbindung des Synchronmotors oder eines der Synchronmotoren mit der oder jeder ersten Asynchronmaschine ansteuerbar ist.

Die Steuereinrichtung kann dabei eine Identifikationslogik umfassen, um eine Betriebszustandsänderung automatisch zu erkennen und den Umschaltvorgang einzuleiten. Alternativ kann die Steuereinrichtung von einer externen Identifikationslogik angesteuert sein.

Bei einer Antriebsvorrichtung mit einem Synchronmotor ist mittels der Steuereinrichtung während eines zweiten Betriebszustands (DP) die Umschalteinrichtung zur elektrischen Verbindung von Synchronmotor und erster Asynchronmaschine über den Umrichter ansteuerbar. Bei einer Antriebsvorrichtung mit zumindest einem ersten und einem zweiten Synchronmotor ist mittels der Steuereinrichtung während eines zweiten Betriebszustands die Umschalteinrichtung zur Trennung der elektrischen Verbindung zwischen einem der Synchronmotoren und der ersten Asynchronmaschine ansteuerbar. Die Umschaltung aufgrund einer Ansteuerung durch die Steuereinrichtung bewirkt also bei beiden Ausführungsformen der Antriebsvorrichtung, dass der Umrichter aktiviert wird und dass entweder der eine Synchronmotor nur über den Umrichter angesteuert wird oder dass nur derjenige Synchronmotor, dem eingangsseitig ein Umrichter zugeordnet ist, angesteuert wird. Wenn hier einerseits von einer Antriebsvorrichtung mit einem Synchronmotor und andererseits von einer Antriebsvorrichtung mit zwei Synchronmotoren gesprochen wird, ist von einer Antriebsvorrichtung mit "einem" Synchronmotor auch eine Antriebsvorrichtung mit einer Gruppe von Synchronmotoren umfasst, wobei jeder Synchronmotor in dieser Gruppe genauso angesteuert wird wie der eine Synchronmotor. Entsprechendes gilt für eine Antriebsvorrichtung mit zwei Synchronmotoren, wobei an die Stelle jedes der "beiden" Synchronmotore jeweils auch eine Gruppe von Synchronmotoren treten kann.

Bevorzugt ist vorgesehen, dass der Umrichter leistungsmäßig auf den zweiten Betriebszustand ausgelegt ist, so dass dann ein im Vergleich zu bisher erforderlichen Umrichtern kostengünstigerer Umrichter und insgesamt eine kostengünstigere Antriebsvorrichtung realisierbar sind.

Als mechanischer Energiepuffer ist bevorzugt ein System vorgesehen, das neben der ersten Asynchronmaschine ein Schwungrad und eine zweite Asynchronmaschine umfasst, wobei die zweite Asynchronmaschine mit dem Energieversorgungsnetz verbindbar und mechanisch mit dem Schwungrad verbunden ist, und wobei das Schwungrad mechanisch mit der erster Asynchronmaschine verbunden ist. Aufgrund einer Energieversorgung aus dem Versorgungsnetz treibt also die zweite Asynchronmaschine das Schwungrad an, so dass die zweite Asynchronmaschine als Asynchronmotor betrieben wird. Das Schwungrad wiederum und die dort gespeicherte kinetische Energie treiben die erste Asynchronmaschine an, so dass diese als Asynchrongenerator betrieben wird. Bei einer günstigen Massenverteilung des Schwungrades wirkt das beschriebene System als Energiepuffer, der je nach Masse des Schwungrades auch kurzzeitige Spannungseinbrüche aus dem Energieversorgungsnetz kompensieren kann.

Die oben genannte Aufgabe wird auch mit einem Verfahren zum Betrieb einer Antriebsvorrichtung wie hier und im Folgenden beschrieben gelöst, indem die Umschalteinrichtung in Abhängigkeit von einem ersten oder zweiten Betriebszustand der Antriebsvorrichtung gesteuert wird. Bevorzugt ist dafür vorgesehen, dass die Steuereinrichtung den ersten oder zweiten Betriebszustand sensiert und die Umschalteinrichtung entsprechend ansteuert, so dass auch eine automatische Betriebszustandsumschaltung erfolgen kann. Als Mittel zur Implementierung des Verfahrens ist eine Steuereinrichtung vorgesehen, die von zumindest einem Sensor Signale zum jeweiligen Betriebszustand erhält, so dass für die Steuereinrichtung erkennbar ist, wann ein Übergang zwischen dem ersten und dem zweiten Betriebszustand erforderlich ist und entsprechend eine Ansteuerung der Umschalteinrichtung veranlasst werden kann. Ein dafür vorgesehener Sensor ist entweder dem oder einem der Synchronmotoren oder dem mit dem Synchronmotor jeweils beeinflussten Verarbeitungsprozess zugeordnet.

Eine zur Implementierung des Verfahrens vorgesehene Funktionalität der Steuereinrichtung ist üblicherweise in Software oder in Kombination aus Soft- und Hardware implementiert, so dass die Erfindung insoweit auch eine Antriebsvorrichtung mit Programmcodemitteln zur Implementierung des hier und im Folgenden beschriebenen Verfahrens umfasst.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: eine erfindungsgemäße Antriebsvorrichtung mit einer Umschalteinrichtung und
- FIG 2, 3: alternative Ausführungsformen der erfindungsgemäßen Antriebsvorrichtung.

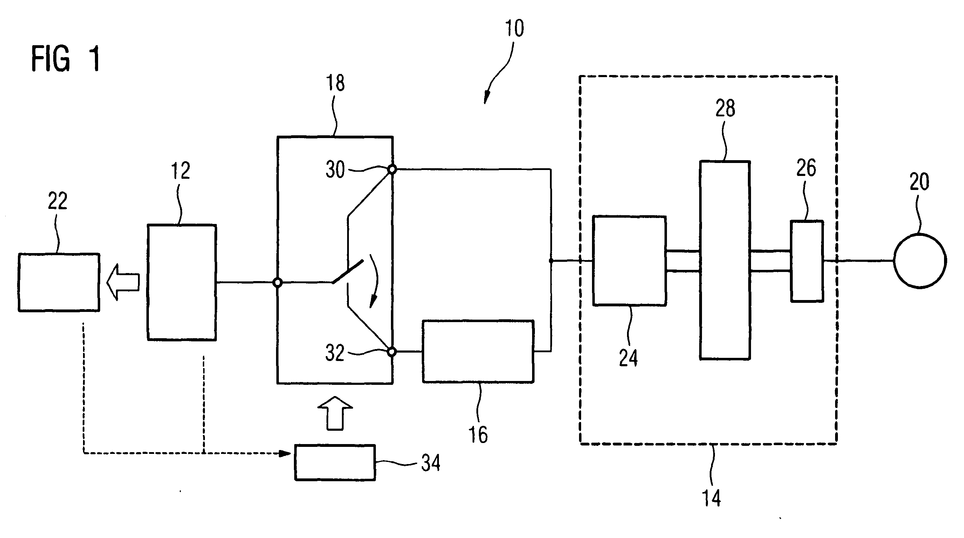

In FIG 1 ist eine Ausführungsform einer erfindungsgemäßen Antriebsvorrichtung 10 dargestellt. Die Antriebsvorrichtung 10 und auch die in den nachfolgenden Figuren dargestellten Antriebsvorrichtungen 10 umfassen einen Synchronmotor 12, einen mechanischen Energiepuffer 14, einen Umrichter 16 und eine Umschalteinrichtung 18. Die Antriebsvorrichtung 10 ist insgesamt an ein Energieversorgungsnetz 20 angeschlossen, und der Synchronmotor 12 erzeugt die für einen Verarbeitungsprozess 22, beispielsweise einen Pressvorgang, erforderliche mechanische Leistung, um z.B. eine Servopresse anzutreiben. Anstelle des gezeigten einen Synchronmotors 12 können auch mehrere Synchronmotoren 12 vorgesehen sein.

Der mechanische Energiepuffer 14 umfasst, und auch dies gilt wiederum sowohl für die in FIG 1 als auch für die in den nachfolgenden Figuren dargestellte Antriebsvorrichtung 10, eine erste und eine zweite Asynchronmaschine 24, 26 und ein Schwungrad 28. Die erste Asynchronmaschine 24 dient zur Stromversorgung des oder der Synchronmotoren 12. Die zweite Asynchronmaschine 26 ist an das Energieversorgungsnetz 20 angeschlossen und treibt im Betrieb das mit diesem mechanisch verbundene Schwungrad 28 an. Aufgrund einer weiteren mechanischen Verbindung zwischen Schwungrad 28 und erster Asynchronmaschine 24 führt jede Rotation des Schwungrads 28 zu einer Betätigung der ersten Asynchronmaschine 24, die also als Generator wirkt und die durch das Schwungrad 28 übertragene kinetische Energie in elektrische Energie umwandelt. Bei geeigneter Massenverteilung des Schwungrads 28 ist aufgrund dessen Trägheit auch eine kurzfristige Kompensation evtl. Ausfälle des Energieversorgungsnetzes 20 möglich. Darüber hinaus ist es mit einem Energiepuffer 14 möglich, Lastspitzen vom Energieversorgungsnetz 20 fernzuhalten.

Bei der in FIG 1 dargestellten Antriebsvorrichtung 10 ist die erste Asynchronmaschine 24 an einen ersten Eingang 30 der Umschalteinrichtung 18 angeschlossen, so dass die erste Asynchronmaschine 24 über die Umschalteinrichtung 18 elektrisch direkt mit dem Synchronmotor 12 verbindbar ist. An einen zweiten Eingang 32 der Umschalteinrichtung 18 ist der Umrichter 16 angeschlossen, der seinerseits an die erste Asynchronmaschine 24 angeschlossen ist. Je nach Schaltzustand der Umschalteinrichtung 18 ist der Synchronmotor 12 entweder direkt (also nur über die Umschalteinrichtung 18) oder indirekt, nämlich über den Umrichter 16 (und die Umschalteinrichtung 18), an die erste Asynchronmaschine 24 angeschlossen. Der direkte Anschluss des Synchronmotors 12 an die erste Asynchronmaschine 24 ist für einen ersten Betriebszustand vorgesehen, bei dem während einer quasi-stationären Phase (QSP) des Verarbeitungsprozess 22 eine konstante Drehzahl und ein hohes Drehmoment des Synchronmotors 12 erforderlich sind. Während der quasi-stationären Phase (QSP) sind hohe Ströme gefordert, die von der ersten Asynchronmaschine 24 dem Synchronmotor 12 direkt zuführbar sind. Der Umrichter 16 ist in diesem ersten Betriebszustand bevorzugt nicht an der Leistungsbereitstellung für den Synchronmotor 12 beteiligt. Alternativ kann der Umrichter 16 in diesem ersten Betriebszustand ergänzend Leistung bereitstellen.

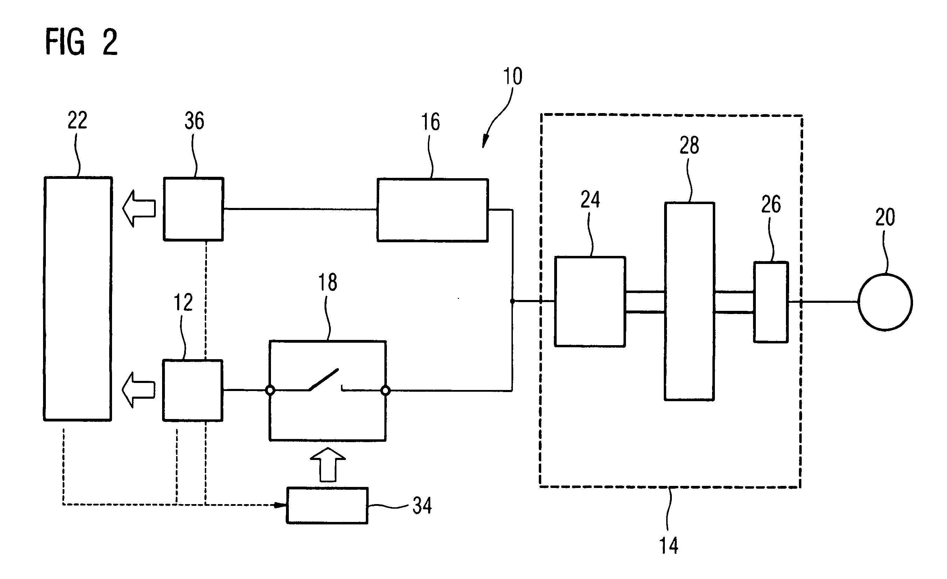

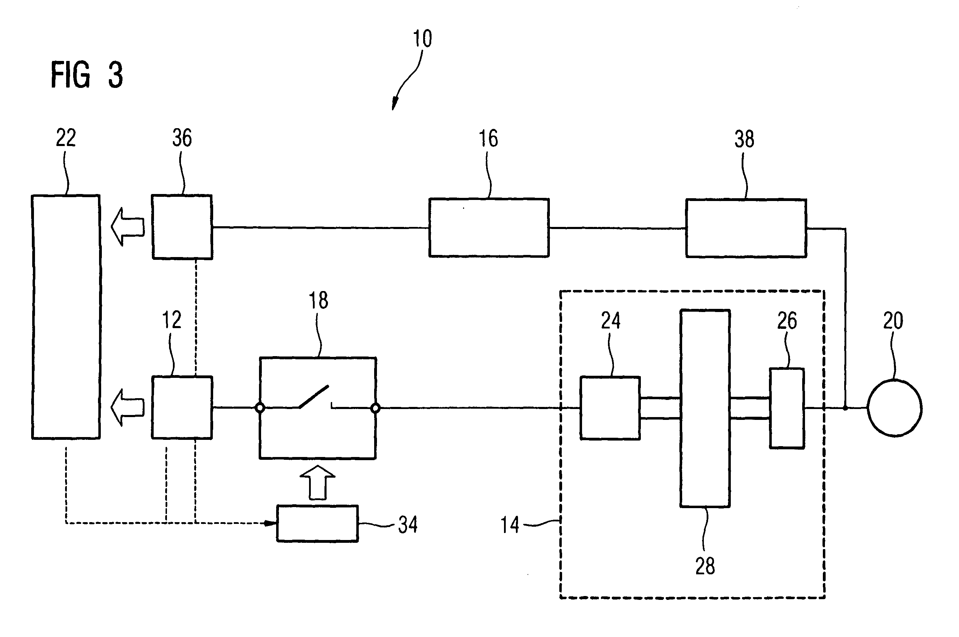

Während eines zweiten Betriebszustands, der zur Unterscheidung als dynamische Phase (DP) bezeichnet wird, ist der Synchronmotor 12 bei vergleichsweise geringem Drehmoment (= verringerter Strom) mit unterschiedlichen Drehzahlen zu betreiben. Für diesen Betriebszustand wird die Umschalteinrichtung 18 umgeschaltet, so dass der Synchronmotor 12 mittelbar, nämlich über den Umrichter 16, an die erste Asynchronmaschine 24 angeschlossen ist. Der Umrichter 16 kann zur Drehzahlregelung verwendet werden und es findet eine geregelte Leistungsbereitstellung für den Synchronmotor 12 statt. In diesem zweiten Betriebszustand ist eine genaue und schnelle Regelung der benötigten Leistung erforderlich, da hier die Drehzahl stark schwanken kann und der Umrichter 16 dementsprechend schnell reagieren muss. In diesem zweiten Betriebszustand ist eine leistungsmäßige Versorgung des Synchronmotors 12 direkt durch die erste Asynchronmaschine 24 nicht ratsam oder sogar unmöglich, da die erste Asynchronmaschine 24 und ihr entsprechend vorgeschaltetes System zur Energiepufferung zu träge wäre. Der Vorteil der in FIG 1 und in den nachfolgenden Figuren dargestellten Antriebsvorrichtung 10 besteht darin, dass der Umrichter 16 bei den geringeren Strömen während der dynamischen Phase nicht so ausgelegt werden braucht, dass auch die Ströme, die bei der quasi-stationären Phase fließen, den Stromrichter 16 nicht beschädigen. Die Umschalteinrichtung 18 wirkt also im Bedarfsfall als Bypass-Einrichtung für den Umrichter 16. Bei anderen Schaltungen (FIG 2, FIG 3) ist die Verbindung mit dem Umrichter 16 optional.

Zur Ansteuerung der Umschalteinrichtung 18 ist eine Steuereinrichtung 34 vorgesehen, die den ersten oder zweiten Betriebszustand sensiert, z.B. anhand vom beim Synchronmotor 12 oder im Verarbeitungsprozess 22 aufgenommenen Messwerten.

FIG 2 zeigt eine alternative Ausführungsform der in FIG 1 dargestellten Antriebsvorrichtung. Im Unterschied zu der in FIG 1 dargestellten Antriebsvorrichtung 10 weist diese Antriebsvorrichtung zwei Synchronmotoren auf, die im Folgenden zur Unterscheidung als erster Synchronmotor 12 und zweiter Synchronmotor 36 bezeichnet werden. Der erste Synchronmotor 12 ist genauso wie der in FIG 1 dargestellte Synchronmotor 12 über die Umschalteinrichtung 18 an die erste Asynchronmaschine 24 angeschlossen. Also auch bei dieser Ausführungsform ist die erste Asynchronmaschine 24 über die Umschalteinrichtung 18 elektrisch direkt mit einem der Synchronmotore, nämlich dem ersten Synchronmotor 12, verbindbar. Darüber hinaus ist die erste Asynchronmaschine 24 dauerhaft über den Umrichter 16 mit dem anderen Synchronmotor, also dem zweiten Synchronmotor 36, verbunden. Die Steuereinrichtung 34 bewirkt während des ersten Betriebszustands (QSP) eine Ansteuerung der Umschalteinrichtung 18 zur elektrischen Verbindung des ersten Synchronmotors 12 mit der ersten Asynchronmaschine 24. Im zweiten Betriebszustand (DP) bewirkt die Steuereinrichtung 34 eine Trennung der elektrischen Verbindung des ersten Synchronmotors 12 und der ersten Asynchronmaschine 24. Im ersten Betriebszustand, also während der quasi-stationären Phase, sind beide Synchronmotoren 12, 36 zur Beeinflussung des Verarbeitungsprozesses 22, also z.B. zum Antrieb einer Presse, wirksam. Der zweite Synchronmotor 36 ist dabei so dimensioniert, dass dieser während eines zweiten Betriebszustands, also einer dynamischen Phase (DP), den Antrieb des Verarbeitungsprozesses 22 allein bewältigen kann. Der Umrichter 16 ist damit auf einen entsprechenden Strombedarf des zweiten Synchronmotors 36 ausgelegt. Auch während der quasi-stationären Phase (QSP) fließt damit über den Stromrichter 16 nicht mehr Strom als der zweite Synchronmotor 36 "abruft", und der hohe Strom zum Erhalt der während der quasi-stationären Phase benötigten Drehmomente wird im Wesentlichen vom ersten Synchronmotor 12 abgerufen und diesem über die Umschalteinrichtung 18 zugeführt. Für die Ansteuerung der Umschalteinrichtung 18 sensiert die Steuereinrichtung 34 Übergänge zwischen dem ersten und dem zweiten Betriebszustand.

FIG 3 zeigt eine Ausführungsform der Antriebsvorrichtung, die im Wesentlichen der in FIG 2 gezeigten Antriebsvorrichtung 10 entspricht. Im Unterschied dazu wird der Umrichter 16 allerdings nicht von der ersten Asynchronmaschine 24, also zumindest mittelbar aus dem mechanischen Energiepuffer 14 gespeist, sondern über einen an das Energieversorgungsnetz 20 angeschlossenen elektrischen Energiepuffer 38, also z.B. ein großer Kondensator oder ein Kondensatornetzwerk.

Für eine Regelung des Synchronmotors 12 (FIG 1) oder des ersten Synchronmotors 12 (Figuren 2, 3) lässt sich noch darauf hinweisen, dass sich aus einer Schlupfkennlinie der ersten Asynchronmaschine 24 eine für diesen Prozesszustand zugeschnittene Drehzahlregelung ableiten lässt. Bezüglich des Schlupfes ergibt sich hier eine P-Regelung, deren Verstärkung durch die Steigung der Schlupfkennlinie der ersten Asynchronmaschine 24 festgelegt ist. Zum Zeitpunkt der Zuschaltung ist die elektrische Drehfrequenz der ersten Asynchronmaschine 24 höher als diejenige des jeweiligen Synchronmotors 12. In diesem Zustand wirkt die erste Asynchronmaschine 24 als Generator und versorgt den jeweiligen Synchronmotor 12 mit elektrischer Energie, die dieser dann in Form von mechanischer Energie dem Prozess 22 zuführt. Der sich durch die Wandlung von kinetischer in elektrische Energie einstellende Drehzahleinbruch im mechanischen Energiepuffer 14 mit den beiden Asynchronmaschinen 24, 26 kann durch entsprechende Auslegung der in diesem System vorhandenen Trägheit (des Schwungrades 28) in einem vorgesehenen Toleranzfenster gehalten werden.

Die genannte Trägheit kann durch das mit der ersten Asynchronmaschine 24 verbundene Schwungrad 28 sowie die mechanisch mit dem Schwungrad 28 verbundene zweite Asynchronmaschine 26 optimiert werden. Die Kombination aus zweiter und erster Asynchronmaschine 26, 24 zusammen mit dem Schwungrad 28 fungiert also als mechanischer Energiespeicher oder Energiepuffer. Hierdurch können prozessbedingte Stromspitzen vom Netz ferngehalten werden, da die trägen Massen ausgleichend wirken.

Durch die an die Leistungsanforderungen des jeweiligen Betriebszustands angepasste Umschaltung des Synchronmotors 12 entweder direkt auf die erste Asynchronmaschine 24 oder indirekt auf diese mittels des Umrichters 16 ist es nicht mehr erforderlich, den Umrichter gewissermaßen "überzudimensionieren", sondern der Umrichter 16 muss nur noch an den geringeren Strombedarf des zweiten Betriebszustands angepasst sein. Dadurch können die Anschaffungs- und Auslegungskosten für die Antriebsvorrichtung erheblich reduziert werden.

Im zweiten Betriebszustand, während welchem der Umrichter 16 die leistungsmäßige Versorgung des Synchronmotors 12 übernimmt, ist nun ein kleinerer Leistungs- bzw. Strombedarf vorhanden. Beispielsweise kann die Anwendung der Erfindung in Zusammenhang mit einer Servopresse als Verarbeitungsprozess 22 zu einem Momenten- und Strombedarf während des zweiten Betriebszustands führen, welcher im Vergleich zum entsprechenden Bedarf im ersten Betriebszustand weniger als ein Drittel beträgt. Der Umrichter 16 kann daher hinsichtlich seiner Stromtragfähigkeit entsprechend kleiner dimensioniert werden. Bei einer erfindungsgemäßen Antriebsvorrichtung 10 kann also der Umrichter 16 im Vergleich zu Vorrichtungen aus dem Stand der Technik kleiner dimensioniert werden, was zu geringeren Investitions- und Betriebskosten führt. Während des Betriebs im ersten Betriebszustand mit hohem Leistungsbedarf bei weitgehend konstanter Drehzahl sorgt ein System aus erster Asynchronmaschine 24, Schwungrad 28 und zweiter Asynchronmaschine 26 dafür, dass Leistungsspitzen vom Energieversorgungsnetz 20 ferngehalten werden und eine große Leistung für den Synchronmotor 12 zur Verfügung gestellt wird bei weitgehend konstanter Drehzahl, so dass die Antriebsvorrichtung 10 insgesamt robust arbeitet. Im zweiten Betriebszustand mit variabler Drehzahl und geringerer Leistung bleibt "alls beim alten" und der Umrichter 16 versorgt den Synchronmotor 12 mit variabler Leistung.

Damit lässt sich die vorliegende Erfindung zusammenfassend kurz wie folgt beschreiben: Es werden eine Antriebsvorrichtung 10 mit mindestens einem Synchronmotor 12, einem Umrichter 16 und einem aus einem Energieversorgungsnetz 20 speisbaren mechanischen Energiepuffer 14, der zur Umwandlung mechanischer Energie in elektrischen Strom eine erste Asynchronmaschine 24 umfasst, und ein Betriebsverfahren für eine solche Antriebsvorrichtung 10 angegeben, bei der bzw. bei dem der Energiepuffer 14, insbesondere dessen erste Asynchronmaschine 24, über eine Umschalteinrichtung 18 elektrisch direkt mit dem mindestens einen Synchronmotor 12 verbindbar ist, so dass der von der Antriebsvorrichtung 10 umfasste Umrichter 16 bei einer derartigen Schaltstellung der Umschalteinrichtung 18 umgangen wird, und der Umrichter 16 entsprechend nicht für Ströme, die bei einer derartigen Schaltstellung der Umschalteinrichtung 18 fließen, ausgelegt werden muss.

## Patentansprüche

1. Antriebsvorrichtung (10), mit
mindestens einem Synchronmotor (12), einem Umrichter (16) und einem aus einem Energieversorgungsnetz (20) speisbaren mechanischen Energiepuffer (14), der zur Umwandlung mechanischer Energie in elektrischen Strom eine erste Asynchronmaschine (24) umfasst,
**dadurch gekennzeichnet,**
**dass** die erste Asynchronmaschine (24) über eine Umschalteinrichtung (18) elektrisch direkt mit dem mindestens einen Synchronmotor (12) verbindbar ist, womit sich eine Möglichkeit zur Umgehung des Umrichters (16) ergibt.

2. Antriebsvorrichtung nach Anspruch 1, mit zwei Synchronmotoren - erster und zweiter Synchronmotor (12,36) -, wobei die erste Asynchronmaschine (24) über die Umschalteinrichtung (18) elektrisch direkt mit einem der beiden Synchronmotoren (12,36) - erster Synchronmotor (12) - verbindbar und dauerhaft über den Umrichter (16) elektrisch mit dem anderen Synchronmotor - zweiter Synchronmotor (36) - verbunden ist.

3. Antriebsvorrichtung nach Anspruch 1, mit zwei Synchronmotoren (12, 36), wobei die erste Asynchronmaschine (24) über die Umschalteinrichtung (18) elektrisch direkt mit einem der beiden Synchronmotoren (12,36) - erster Synchronmotor (12) - verbindbar ist und der andere Synchronmotor - zweiter Synchronmotor (36) - über den Umrichter (16) oder den Umrichter (16) und einen elektrischen Energiepuffer (38) direkt aus dem Energieversorgungsnetz (20) speisbar ist.

4. Antriebsvorrichtung nach einem der Ansprüche 1 bis 3, mit einer Steuereinrichtung (34), mit der während eines ersten Betriebszustands die Umschalteinrichtung (18) zur elektrischen Verbindung des Synchronmotors (12) bzw. eines der Synchronmotoren (12, 36) mit der ersten Asynchronmaschine (24) ansteuerbar ist.

5. Antriebsvorrichtung nach Anspruch 1 und Anspruch 4, wobei mit der Steuereinrichtung (34) während eines zweiten Betriebszustands die Umschalteinrichtung (18) zur elektrischen Verbindung des Synchronmotors (12) über den Umrichter (16) mit der ersten Asynchronmaschine (24) ansteuerbar ist.

6. Antriebsvorrichtung nach einem der Ansprüche 2 oder 3 und Anspruch 4, wobei mit der Steuereinrichtung (34) während eines zweiten Betriebszustands die Umschalteinrichtung (18) zur Trennung der elektrischen Verbindung des ersten Synchronmotors (12) mit der ersten Asynchronmaschine (24) ansteuerbar ist.

7. Antriebsvorrichtung (10) nach einem der Ansprüche 4 bis 6, wobei der erste Betriebszustand ein Betriebszustand mit im Wesentlichen konstanter Drehzahl und hohem Strombedarf und der zweite Betriebszustand ein Betriebszustand mit variabler Drehzahl und einem im Vergleich zum ersten Betriebszustand geringeren Strombedarf ist.

8. Antriebsvorrichtung (10) nach Anspruch 7, wobei der Umrichter (16) leistungsmäßig auf den zweiten Betriebszustand ausgelegt ist.

9. Antriebsvorrichtung nach einem der Ansprüche 1 bis 8, wobei der mechanische Energiepuffer (14) neben der ersten Asynchronmaschine (24) ein Schwungrad (28) und eine zweite Asynchronmaschine (26) umfasst,
wobei die zweite Asynchronmaschine (26) mit dem Energieversorgungsnetz (20) verbindbar und mechanisch mit dem Schwungrad (28) verbunden ist und
wobei das Schwungrad (28) mechanisch mit der ersten Asynchronmaschine (24) verbunden ist.

10. Verfahren zum Betrieb einer Antriebsvorrichtung nach einem der Ansprüche 1 bis 9, wobei die Umschalteinrichtung (18) in Abhängigkeit von einem ersten oder zweiten Betriebszustand der Antriebsvorrichtung (10) angesteuert wird.

11. Verfahren nach Anspruch 10 zum Betrieb einer Antriebsvorrichtung nach einem der Ansprüche 4 bis 8, wobei die Steuereinrichtung (34) den ersten oder zweiten Betriebszustand sensiert und die Umschalteinrichtung (18) entsprechend ansteuert.

12. Antriebsvorrichtung nach einem der Ansprüche 1 bis 9 mit Mitteln, insbesondere Programmcodemitteln, zur Implementierung des Verfahrens nach einem der Ansprüche 10 oder 11.

## Claims

1. Drive apparatus (10), with
at least one synchronous motor (12), a converter (16) and a mechanical energy buffer (14) able to be fed from an energy supply network (20) which, for converting mechanical energy into electrical current, includes a first asynchronous machine (24),
**characterised in that**
the first asynchronous machine (24) is able to be electrically directly connected via a switchover device (18) to the at least one synchronous motor (12), which provides an option for bypassing the converter (16).

2. Drive apparatus according to claim 1, with two synchronous motors - first and second synchronous motor (12, 36), with the first asynchronous machine (24) being electrically directly connected via the switchover device (18) to one of the two synchronous motors (12, 36) - first synchronous motor (12) - and permanently electrically connected via the converter (16) to the other synchronous motor - second synchronous motor (36).

3. Drive apparatus according to claim 1, with two synchronous motors (12, 36), with the first asynchronous machine (24) being electrically directly connected via the switchover device (18) to one of the two synchronous motors (12, 36) - first synchronous motor (12) - and the other synchronous motor - second synchronous motor (36) - being able to be fed directly via the converter (16) or the converter (16) and an electrical energy buffer (38) from the energy supply network (20).

4. Drive apparatus according to one of claims 1 to 3, with a control device (34), with which, during a first operating state, the switchover device (18) is able to be controlled for electrical connection of the synchronous motor (12) or of one of the synchronous motors (12, 36) to the first asynchronous machine (24).

5. Drive apparatus according to claim 1 and claim 4, with the switchover device (18) able to be controlled by the control device (34) during a second operating state for electrical connection of the synchronous motor (12) via the converter (16) to the first asynchronous machine (24).

6. Drive apparatus according to one of claims 2 or 3 and claim 4, with the switchover device (18) able to be controlled with the control device (34) during a second operating state for disconnecting the electrical connection between the first synchronous motor (12) and the first asynchronous machine (24).

7. Drive apparatus (10) according to one of claims 4 to 6, with the first operating state being an operating state with essentially constant speed and high power demand and the second operating state being an operating state with variable speed and a lower power demand by comparison with the first operating state.

8. Drive apparatus (10) according to claim 7, with the converter (16) being power rated for the second operating state.

9. Drive apparatus (10) according to one of claims 1 to 8, with the mechanical energy buffer (14) comprising a flywheel (28) and a second asynchronous machine (26) in addition to the first asynchronous machine (24),
with the second asynchronous machine (26) being connected to the energy supply network (20) and being connected mechanically to the flywheel (28) and
with the flywheel (28) being connected mechanically to the first asynchronous machine (24).

10. Method for operating a drive apparatus according to one of claims 1 to 9, with the switchover device (18) being controlled as a function of a first or second operating state of the drive apparatus (10).

11. Method according to claim 10 for operation of a drive apparatus as claimed in one of claims 4 to 8, with the control device (34) sensing the first or second operating state and controlling the switchover device (18) accordingly.

12. Drive apparatus according to one of claims 1 to 9 with means, especially program code means, for implementing the method as claimed in one of the claims 10 or 11.

## Revendications

1. Dispositif ( 10 ) d'entraînement, comprenant
au moins un moteur ( 12 ) synchrone, un convertisseur ( 16 ) et un tampon ( 14 ) d'énergie mécanique, qui peut être alimenté par un réseau ( 20 ) d'alimentation en énergie et qui comprend une première machine ( 24 ) asynchrone pour la transformation d'énergie mécanique en courant électrique,
**caractérisé**
**en ce que** la première machine ( 24 ) asynchrone peut être reliée électriquement directement au au moins un moteur ( 12 ) synchrone par un dispositif ( 18 ) de commutation, en donnant ainsi une possibilité de contourner le convertisseur ( 16 ).

2. Dispositif d'entraînement suivant la revendication 1, comprenant deux moteurs synchrones -, un premier et un deuxième moteurs ( 12, 36 ) synchrones - la première machine ( 24 ) asynchrone pouvant être reliée électriquement directement avec l'un des deux moteurs ( 12, 36 ) synchrones - le premier moteur ( 12 ) synchrone - par le dispositif ( 18 ) de commutation et étant reliée durablement par le convertisseur ( 16 ) électriquement à l'autre moteur synchrone - le deuxième moteur ( 36 ) synchrone.

3. Dispositif d'entraînement suivant la revendication 1, comprenant deux moteurs ( 12, 36 ) synchrones, la première machine ( 24 ) asynchrone pouvant être reliée électriquement directement avec l'un des deux moteurs ( 12, 36 ) synchrones - le premier moteur ( 12 ) synchrone - par le dispositif ( 18 ) de commutation et l'autre moteur synchrone - le deuxième moteur ( 36 ) synchrone - pouvant être alimenté par le convertisseur ( 16 ) ou par le convertisseur ( 16 ) et par un autre tampon ( 38 ) d'énergie électrique directement à partir du réseau ( 20 ) d'alimentation en énergie.

4. Dispositif d'entraînement suivant l'une des revendications 1 à 3, comprenant un dispositif ( 34 ) de commande par lequel, pendant un premier état de fonctionnement, le dispositif ( 18 ) de commutation peut être commandé pour la liaison électrique du moteur ( 12 ) synchrone ou de l'un des moteurs ( 12, 36 ) synchrones avec la première machine ( 24 ) asynchrone.

5. Dispositif d'entraînement suivant la revendication 1 et la revendication 4, dans lequel, par le dispositif ( 34 ) de commande, pendant un deuxième état de fonctionnement, le dispositif ( 18 ) de commutation peut être commandé pour la liaison électrique du moteur ( 12 ) synchrone à la première machine ( 24 ) asynchrone par le convertisseur ( 16 ).

6. Dispositif d'entraînement suivant l'une des revendications 2 ou 3 et la revendication 4, dans lequel, par le dispositif ( 34 ) de commande, pendant un deuxième état de fonctionnement, le dispositif ( 18 ) de commutation peut être commandé pour couper la liaison électrique du premier moteur ( 16 ) synchrone à la première machine ( 24 ) asynchrone.

7. Dispositif d'entraînement suivant l'une des revendications 4 à 6, dans lequel le premier état de fonctionnement est un état de fonctionnement ayant une vitesse de rotation sensiblement constante et un grand besoin de courant et le deuxième état de fonctionnement est un état de fonctionnement ayant une vitesse de rotation variable et un besoin de courant comparativement plus petit que le premier état de fonctionnement.

8. Dispositif d'entraînement suivant la revendication 7, dans lequel le convertisseur ( 16 ) est conçu, du point de vue de la puissance, sur le deuxième état de fonctionnement.

9. Dispositif d'entraînement suivant l'une des revendications 1 à 8, dans lequel le tampon ( 14 ) d'énergie mécanique comprend, outre la première machine ( 24 ) asynchrone, un volant ( 28 ) et une deuxième machine ( 26 ) asynchrone,
dans lequel la deuxième machine ( 26 ) asynchrone peut être reliée au réseau ( 20 ) d'alimentation en énergie et reliée mécaniquement au volant ( 28 ) et
dans lequel le volant ( 28 ) est relié mécaniquement à la première machine ( 24 ) asynchrone.

10. Procédé pour faire fonctionner un dispositif d'entraînement suivant l'une des revendications 1 à 9, dans lequel on commande le dispositif ( 18 ) de commutation en fonction d'un premier ou d'un deuxième état de fonctionnement du dispositif ( 10 ) d'entraînement.

11. Procédé suivant la revendication 10 pour faire fonctionner un dispositif d'entraînement suivant l'une des revendications 4 à 8, dans lequel le dispositif ( 34 ) de commande détecte le premier ou le deuxième état de fonctionnement et commande en conséquence le dispositif ( 18 ) de commutation.

12. Dispositif d'entraînement suivant l'une des revendications 1 à 9 comprenant des moyens, notamment des moyens de code de programme, pour la mise en oeuvre du procédé suivant l'une des revendications 10 ou 11.
